# EUROPÄISCHE PATENTANMELDUNG

(11) **EP 1 215 400 A2**
(43) Veröffentlichungstag der Anmeldung: **19.06.2002**
(21) Anmeldenummer: 01129678.7
(22) Anmeldetag: 13.12.2001
(51) Int. Cl.: F16B 2/00

(54) **Kraftschlüssig miteinander verbindbare Bauteile, kraftschlüssige Verbindung von zwei solchen Bauteilen, und Verfahren zur Herstellung von solchen Bauteilen**

(30) Priorität: 13.12.2000 DE 10062226; 07.04.2001 DE 10117565
(71) Anmelder: Desch Antriebstechnik GmbH & Co. KG, 59759 Arnsberg (DE)
(72) Erfinder: Volbers, Thomas, 59494 Soest (DE); Mauer, Georg Dr.-Ing., 52441 Limmich (DE); Desch, Alexander P, 59759 Arnsberg (DE)
(74) Vertreter: Basfeld, Rainer, Dr. Dipl.-Phys.

(57) **Zusammenfassung**

Die vorliegende Erfindung betrifft kraftschlüssig miteinander verbindbare Bauteile sowie eine Verbindung aus derartigen Bauteilen, mit flächig gegeneinander fügbaren Verbindungsflächen, zwischen denen im Fügespalt Formschlußmittel einbringbar sind, die eine höhere Festigkeit und Härte haben als der Grundwerkstoff der Bauteile. Zur Verbesserung des Kraftschlusses wird vorgeschlagen, daß die Formschlußmittel eine auf zumindest einer Verbindungsfläche eines Bauteils (1a/b) aufgebrachte kristalline Hartstoffschicht (2) mit aus der Schichtoberfläche vorstehenden Kristalliten (4) umfassen.

## Beschreibung

Die vorliegende Erfindung bezieht sich auf eine kraftschlüssige Verbindung von zwei Bauteilen sowie kraftschlüssig miteinander verbindbare Bauteile zur Realisierung einer derartigen Verbindung, mit flächig gegeneinander fügbaren Verbindungsflächen, zwischen denen im Fügespalt Formschlußmittel einbringbar sind, die eine höhere Festigkeit und Härte haben als der Grundwerkstoff der Bauteile.

Der Kraftschluß wird bei kraftschlüssigen Verbindungen der vorgenannten Art dadurch bewerkstelligt, daß die kraftübertragenden Verbindungsflächen der Bauteile mit definierter Andruckkraft gegeneinander gepreßt werden, so daß aufgrund der dann auftretenden Wechselwirkung in Richtung des Fügespalts wirkende Kräfte übertragen werden können, beispielsweise zur Übertragung von Drehmomenten über radiale Verbindungsflächen in klassischen Welle-Nabe-Verbindungen mit radialen Fügeflächen oder auch über axiale Fügeflächen.

Die mögliche Kraftübertragung über die gegeneinander gefügten Verbindungsflächen wird bestimmt durch deren Haftung aufeinander, ausgedrückt durch den sogenannten Haftbeiwert. Dieser Haftbeiwert, zumeist vereinfacht als Reibungswert bzw. Haftreibungswert bezeichnet, ist im wesentlichen abhängig von der Werkstoffpaarung und den Schmierverhältnissen im Fügespalt.

Zur Verbesserung des Kraftschlusses ist es gemäß dem gattungsbildenden Stand der Technik bekannt, zusätzliche Formschlußmittel, nämlich Mikro-Formschlußkörper im Fügespalt anzuordnen. Hierzu ist es beispielsweise bekannt, eine Verbindungsfläche vor dem Zusammenfügen mit fein verteilten Hartstoffkörnern einzustäuben. Diese Hartstoffpartikel bestehen aus einem Werkstoff mit deutlich höherer Härte- und Scherfestigkeit als der Werkstoff der Bauteile, beispielsweise Korund oder dergleichen, so daß sie beim Zusammenfügen unter lokaler Verformung der Oberflächen in diese eingepreßt werden. Durch diesen Mikroformschluß mit den Hartstoffpartikeln wird die Haftung der Verbindungsflächen aufeinander und deren Fähigkeit zur Übertragung von Querkräften und Drehmomenten deutlich erhöht.

Um die Handhabung der Hartstoffpartikel zu verbessern und reproduzierbare Eigenschaften der Verbindung zu erreichen, ist im Stand der Technik ausweislich der EP 0 961 038 A1 bereits vorgeschlagen worden, die Hartstoffpartikel in einer Bindephase auf einer Trägerfolie anzubringen, welche als Formschlußmittel zwischen die Verbindungsflächen eingebracht wird. Darin wird allerdings gefordert, daß die Folie eine Eigenfestigkeit hat, die mindestens ebenso hoch ist wie die der zu fügenden Bauteile. Dies bedingt zum einen eine gewisse Mindestdicke der Folie, welche die Handhabung erschweren kann. Zum anderen ist dadurch unvermeidbar, daß zusätzlich Bindemittel in den Fügespalt eingebracht wird, welches die angestrebte Formschlußwirkung der Hartstoffpartikel beeinträchtigen kann. Dieses Problem tritt im übrigen ebenfalls dann auf, wenn die Bindephase unmittelbar auf eine der zu fügenden Verbindungsflächen aufgebracht wird. Darüber hinaus entstehen durch die zusätzliche Bindephase zwangsläufig zusätzliche Grenzflächen, nämlich in den Bereichen Verbindungsfläche-Bindephase und Hartstoffpartikel-Bindephase, was ebenfalls negativen Einfluß auf die Haftung haben kann.

In der DE 199 21 890 C1 ist zur Erhöhung des Reibwertes zwischen zwei gegeneinander anliegenden Anschlagflächen die Aufbringung einer sogenannten Friktionsschicht vorgeschlagen worden. Diese Friktionsschicht soll durch Flammspritzen, Plasmaspritzen oder ein ähnliches Verfahren aufgebracht werden und Hartstoffpartikel enthalten. Folglich wird dabei ebenfalls ein Gemisch von beim Spritzen angeschmolzenen Bindemittel und Hartstoffpartikeln aufgebracht, die auf der Oberfläche in der Bindemittelphase eingebettet sind. Dadurch ergeben sich dieselben Probleme wie bei dem vorangehend erwähnten Stand der Technik. Außerdem ist die Beschichtung relativ dick, wobei durch die undefinierte, statistische Anordnung der Hartstoffpartikel keine eindeutige Oberflächenqualität gewährleistet ist.

Angesichts der vorgenannten Problematik liegt der vorliegenden Erfindung die Aufgabenstellung zugrunde, die funktionalen Eigenschaften von im Fügespalt eingebrachten Formschlußmitteln zu verbessern, nämlich eine verbesserte Haftung zu erzeugen und dadurch eine verbesserte Kraftübertragung zu erreichen.

Zur Lösung dieser Problematik schlägt die Erfindung bei einer kraftschlüssigen Verbindung zweier kraftschlüssig miteinander verbindbaren Bauteile der eingangs erwähnten Art vor, daß die Formschlußmittel eine auf zumindest einer Verbindungsfläche eines Bauteils aufgebrachte kristalline Hartstoffschicht mit aus der Schichtoberfläche vorstehenden Kristalliten umfassen.

Eine wesentliche Eigenschaft der erfindungsgemäßen Verbindung ist, daß die Formschlussmittel bindemittelfrei ausschließlich aus Hartstoffpartikeln gebildet werden, d. h., keine zusätzliche Bindephase vorhanden ist. Die angestrebte Mikrostrukturierung der Oberfläche wird vielmehr dadurch erreicht, daß mikrokristalline Hartstoffstrukturen unmittelbar auf der Bauteiloberfläche aufgewachsen, d. h., stoffschlüssig angebunden werden.

Ein besonderer Vorteil der erfindungsgemäßen Ausbildung der Mikroformschlußmittel ist, daß die Hartstoff-Formschlußmittel besonders fest an zumindest eine Verbindungsfläche angebunden sind und dadurch ein besonders hoch beanspruchbarer Mikroformschluß zwischen einem erfindungsgemäß beschichteten Bauteil und einem nicht beschichteten Bauteil oder alternativ zwischen zwei erfindungsgemäß beschichteten Bauteilen erfolgen kann. Diese besonderen Eigenschaften werden dadurch erreicht, daß nicht wie bisher vorher bereitgestellte Hartstoffpartikel nachträglich mit einer Binde- bzw. Matrixphase an die zu fügende Werkstoffoberfläche gebunden werden, sondern unmittelbar kristallin darauf abgeschieden werden. Dabei besteht die Möglichkeit, auf ansich bekannte Prozesse wie PVD (Physical-Vapor-Deposition), CVD (Chemical-Vapor-Deposition) und dergleichen zurückzugreifen. Diese Verfahren werden bislang dazu eingesetzt, um beispielsweise hoch beanspruchte Werkzeuge mit extrem beanspruchbaren Verschleißschutzschichten zu versehen, beispielsweise aus Titannitrit (TiN) oder dergleichen. Diese bekannten Hartstoffschichten zeichnen sich durch ihre harte, besonders reibungsarme Oberfläche aus, wodurch sie zur Herstellung einer kraftschlüssigen Verbindung durch die folglich besonders geringe Oberflächenhaftung zur Herstellung einer gattungsgemäßen Verbindung absolut ungeeignet wären. An dieser Stelle setzt nun die Erfindung ein, die Hartstoffschicht gezielt mit einer mikrostrukturierten Oberfläche zu versehen, welche durch vorstehende Kristallstrukturen, d. h., Mikrokristallite gebildet wird. Diese sind säulenartig, normal orientiert auf der Oberfläche aufgewachsen.

Die Erfindung nutzt die extreme Härte und Festigkeit der Hartstoffkristallite und die besonders hohe Festigkeit durch die direkte Abscheidung auf der Materialoberfläche der Bauteile erstmals in besonders vorteilhafter Weise zur Realisierung einer kraftschlüssigen Verbindung durch Mikroformschluß aus. Durch den Wegfall der bislang gebräuchlichen Bindephasen kann die Belastbarkeit einer kraftschlüssigen Verbindung deutlich gesteigert werden.

Besonders vorteilhaft ist es, daß die Hartstoffschicht flächig durchgehend kompakt ausgebildet ist. Im Gegensatz zum Stand der Technik, wo einzelne Kristallite isoliert voneinander durch Bindemittel auf der Verbindungsfläche angebunden sind, sorgt die kompakte Hartstoffschicht für eine besonders sichere Fixierung der Hartstoffkristallite relativ zu den Verbindungsflächen. Selbst unter Beanspruchungen im Bereich der Zerstörungsgrenze ist somit eine Grenzflächenmobilität der Hartstoffpartikel praktisch unmöglich. Dies kommt einer besonders hohen Beanspruchbarkeit der kraftschlüssigen Verbindung zugute.

Eine bevorzugte Anwendung der Erfindung sieht vor, daß die Hartstoffschicht auf einem metallischen Bauteil aufgebracht ist. Dadurch wird ein weiter Bereich des Werkzeug- und Maschinenbaus abgedeckt, beispielsweise von Welle-Nabe-Verbindungen, lösbaren und unlösbaren Spanneinrichtungen, Reibkupplungen, Wälzgetrieben und dergleichen, welche größtenteils aus Stahl bestehen. Darüber hinaus ist es jedoch ebenfalls denkbar, daß die Hartstoffschicht auf einem metallischen Bauteil zur Verbindung mit einem nichtmetallischen Bauteil aufgebracht ist, beispielsweise aus Kunststoff oder Keramik. Dank der erfindungsgemäßen Hartstoffschicht läßt sich nämlich bereits mit geringeren normalen Andruckkräften eine verbesserte Haftung erreichen, was insbesondere für die Verwendung solcher Materialien interessant ist, wenn die Materialeigenschaften der Bauteile eine derartige Beanspruchung nicht zulassen.

Die Schichtdicke der Hartstoffschicht liegt vorzugsweise im µm-Bereich bis zu 10 µm. Die Abmessungen der Kristallite können zumindest in einer Richtung kleiner sein als diese Schichtdicke, beispielsweise unterhalb von ein µm. Dabei ist es durchaus möglich, daß die Kristallite sich durch die gesamte Schichtdicke erstrecken, d. h., von der Bauteiloberfläche aus gewachsen sind und dabei mit ihrem äußeren Ende nach außen aus der erfindungsgemäßen Hartstoffschicht vorstehen.

Die erfindungsgemäße Hartstoffschicht kann sowohl auf einer Verbindungsfläche einer im Betrieb nicht zu lösenden kraftschlüssigen Verbindung angebracht sein, beispielsweise bei einer Welle-Nabe-Verbindung. Die vorteilhaften Eigenschaften lassen sich jedoch gleichfalls für besonders sichere Fixierung eines Bauteils in einer lösbaren Klemm-oder Spannvorrichtung ausnutzen, beispielsweise in einer Spannzange, einem Backenfutter oder einer Klemmschelle.

Eine weitere vorteilhafte Anwendung der Erfindung besteht darin, dass die Wälzfläche eines abwälzenden Elements in einem Wälzgetriebe zumindest teilweise mit einer Hartstoffschicht versehen ist. Das erfindungsgemäße Bauteil ist in dieser Ausführung ein abwälzendes Element, welches mit seinem Außenumfang in reibschlüssigem Kontakt mit einem weiteren abwälzenden Element steht. Durch derartige abwälzende Elemente können beispielsweise Kegel-Ring-Wälzgetriebe mit stufenlos veränderlichem Übersetzungsverhältnis realisiert werden. Von ausschlagebender Bedeutung für die reibschlüssige Leistungsübertragung zwischen den Wälzflächen ist ein möglichst vornutzbarer Wälzreibwert. Dieser läßt sich mit einer erfindungsgemäßen Harstoffschicht realisieren.

Ein erfindungsgemäßes Bauteil kann weiterhin als Zwischenelement, beispielsweise als Zwischenscheibe ausgebildet sein, welches zwischen zwei gegeneinander fügbaren Verbindungsflächen einsetzbar ist und beidseitig mit einer Hartstoffschicht versehen ist. Dadurch können die vorteilhaften Eigenschaften der erfindungsgemäßen Hartstoffschicht in einer reibschlüssigen Verbindung ausgenutzt werden, ohne dass die Verbindungsflächen selbst beschichtet werden müssen.

Die vorliegende Erfindung bezieht sich sowohl auf kraftschlüssig miteinander verbindbare Bauteile, eine daraus hergestellte kraftschlüssige Verbindung, als auch ein Verfahren zur Herstellung von derartigen kraftschlüssig miteinander verbindbaren Bauteilen. Das wesentliche Merkmal dieses Verfahrens besteht darin, daß eine kristalline Hartstoffschicht unmittelbar auf der Verbindungsfläche eines Bauteils kristallin abgeschieden wird. Im einzelnen können die verwendeten Materialien, Verfahrens- und Strukturparameter gemäß den vorangehenden Erläuterungen ausgebildet werden, nämlich, daß die Hartstoffkristallstrukturen gemäß den vorangehenden Erläuterungen vorgegeben werden. Wesentlich ist dabei, daß die Hartstoff-Kristallstrukturen auf der Bauteiloberfläche kristallin aufwachsen, und zwar ohne zusätzliche Binde- bzw. Matrixphase.

Im folgenden wird die Erfindung anhand von Ausführungsbeispielen unter Bezugnahme auf die beigefügten Zeichnungen näher erläutert. Im einzelnen zeigen:
- Fig. 1: eine schematische, mikroskopische Schnittansicht durch eine erfindungsgemäße Hartstoffschicht;
- Fig. 2: eine erfindungsgemäße Welle-Nabe-Verbindung mit Schrumpfsitz;
- Fig. 3: eine Bolzenverbindung;
- Fig. 4: eine lösbare Wellenverbindung mit Schrumpfscheibe;
- Fig. 5: eine lösbare Klemmverbindung;
- Fig. 6: eine lösbare Schaltkupplung;
- Fig. 7: ein Wälzgetriebe.

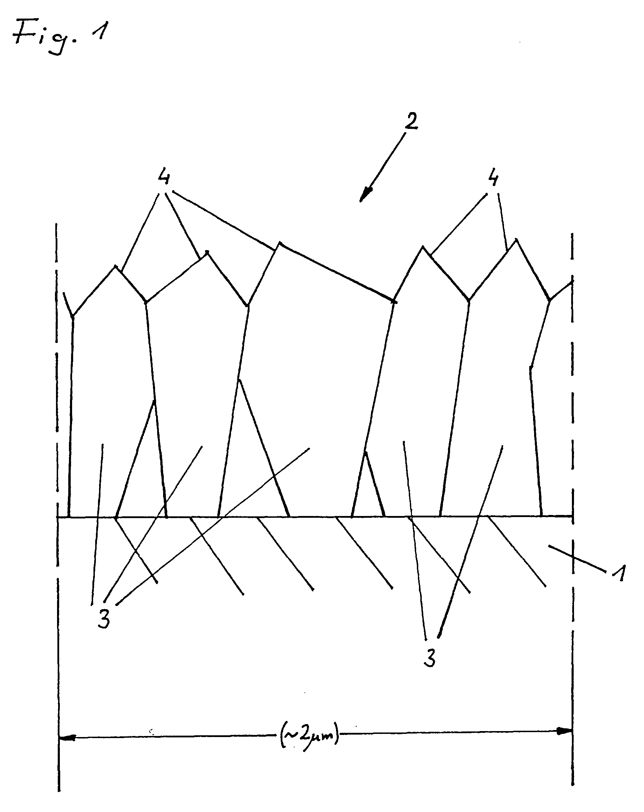

Figur 1 zeigt eine stark vergrößerte Schnittansicht durch die Verbindungsfläche eines erfindungsgemäß ausgestalteten Bauteils, welches zur Herstellung einer kraftschlüssigen Verbindung flächig gegen eine korrespondierende Verbindungsfläche an einem zweiten Bauteil anpreßbar ist. Der dargestellte Ausschnitt hat in der Realität etwa eine Breite von 2 µm. Im unteren Teil ist schraffiert ein Bauteil vereinfacht mit völlig ebener Oberfläche dargestellt und mit dem Bezugszeichen 1 versehen. Erfindungsgemäß ist auf der Oberfläche, d. h. der Verbindungsfläche dieses Bauteils 1 eine kristalline Hartstoffschicht aufgebracht, die beispielsweise aus Titannitrit oder dergleichen besteht. Diese wird aus einer Vielzahl einzelner Mikrokristallite 3 gebildet, die größtenteils unmittelbar auf der Oberfläche des Bauteils 1, beispielsweise im PVD- oder CVD-Verfahren aufgewachsen sind und, in dieser Darstellung deutlich erkennbar auf der Oberseite vorstehende, hier vereinfachte spitz eingezeichnete Kristallitstrukturen aufweisen, welche jeweils mit Bezugszeichen 4 versehen sind. Aus dieser schematischen Darstellung geht hervor, daß die vorstehenden Spitzen 4 der Kristallite 3 für eine Oberflächenrauhigkeit der Hartstoffschicht 2 unterhalb von einem µm sorgen.

Das Bauteil 1 kann aus Metall bestehen, beispielsweise aus Stahl. Das mit dem beschichteten Bauteil 1 zu verbindende Bauteil kann ebenfalls aus keramischem Werkstoff, Kunststoff oder dergleichen bestehen.

In den nachfolgenden Abbildungen sind Ausführungen von erfindungsgemäßen Verbindungen dargestellt, wobei jeweils eines und/oder beide der jeweils mit dem Bezugszeichen 1a bzw. 1b versehenen Bauteile im Bereich der an den Fügespalt angrenzenden Verbindungsflächen mit einer Hartstoffschicht 2 versehen sein kann.

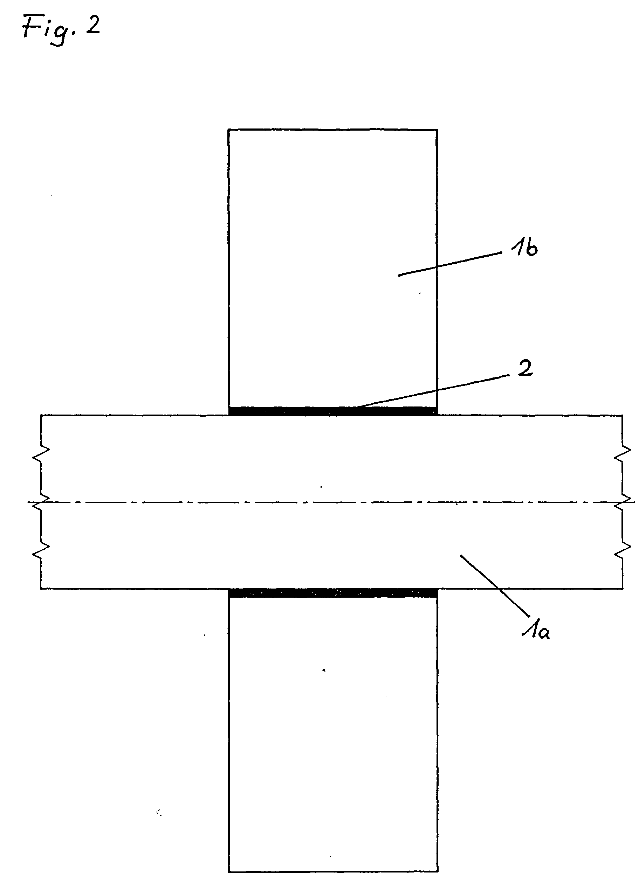

Konkret zeigt Fig. 2 eine Welle-Nabe-Verbindung, bei welcher eine Nabe 1b auf eine Welle 1a thermisch aufgeschrumpft ist. Im Bereich des Schrumpfsitzes, d. h. im Fügespalt, ist die Welle 1a und/oder die Nabe 1b mit einer erfindungsgemäßen Hartstoffschicht 2 gemäß Fig. 1 versehen. Der Mikroformschluß wird dadurch bewerkstelligt, daß die vorstehenden Kristallite 4 mikroformschlüssig in den jeweils anderen Verbindungspartner eingreifen.

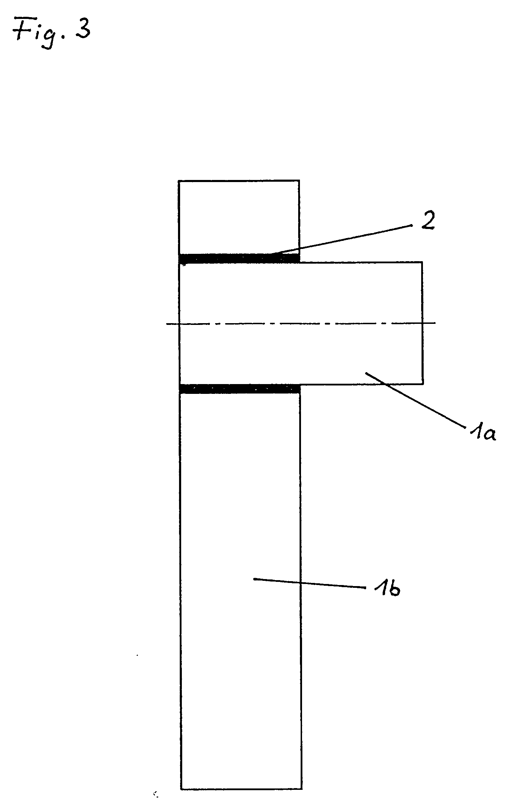

Fig. 3 zeigt eine ähnliche Anwendung wie Fig. 2 mit dem Unterschied, daß darin ein Bolzen 1a fest in einer Scheibe 1d eingesetzt ist. Darin ist der in die Scheibe 1d eingesetzte Bereich des Bolzens 1a und/oder die Aufnahmebohrung in der Scheibe 1d mit einer erfindungsgemäßen Hartstoffschicht 2 versehen, was wie in Fig. 2 mit dem massiv ausgefüllten Bereich angedeutet ist.

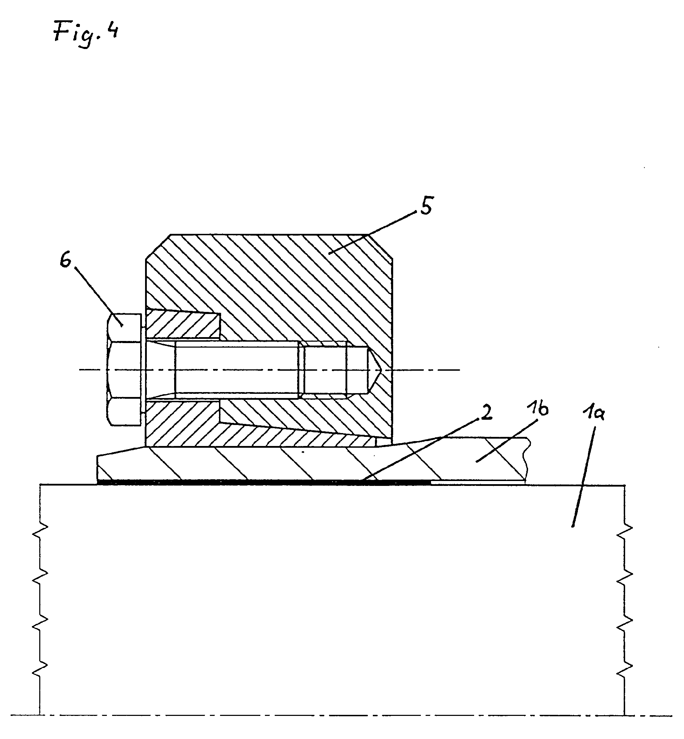

Fig. 4 zeigt eine weitere Anwendung der Erfindung, wobei auf einer Welle 1a eine Schrumpfscheibe 5 kraftschlüssig angebracht ist. Diese Schrumpfscheibe 5 umfaßt einen mittels Schrauben 6 verspannbaren Spannsatz, mit dem ein hülsenförmiges Bauteil 1b radial von außen auf dem Umfang der Welle 1a verspannbar ist. Die gegeneinander lösbar zusammenpreßbaren Verbindungsflächen der Welle 1a und des Bauteils 1b sind mit einer erfindungsgemäßen Hartstoffbeschichtung 2 versehen, wie dies wiederum schematisch mit dem ausgefüllten Bereich angedeutet ist.

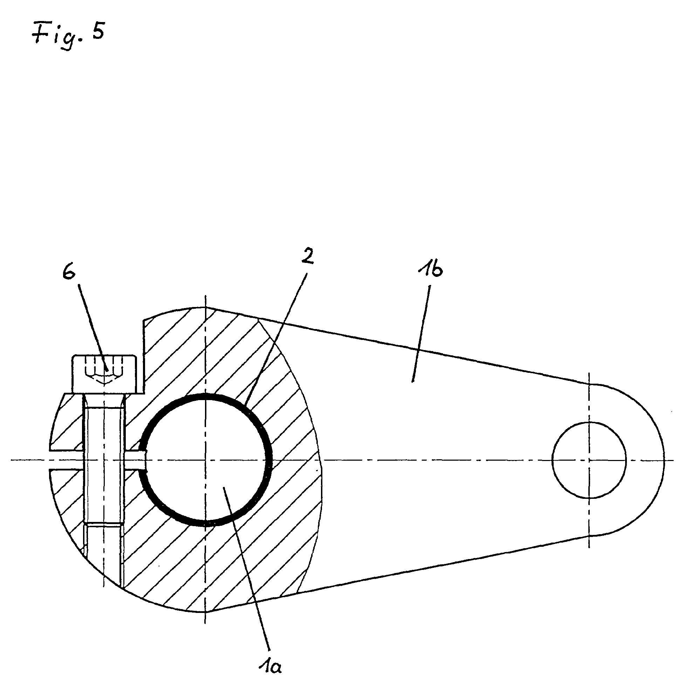

Fig. 5 zeigt eine axiale Ansicht einer abweichend zu Fig. 4 ausgebildeten Klemmverbindung. Darin ist mit dem Bezugszeichen 1b ein Klemmhebel oder dergleichen bezeichnet, der einseitig geschlitzt ist, so daß die Durchgangsbohrung mittels einer Spannschraube 6 radial auf einem Zapfen 1a verspannbar ist. Im Bereich des Fügespalts, d. h. der gegeneinander zu fügenden Verbindungsflächen an dem Zapfen 1a bzw. in der Öffnung des Klemmhebels 1b ist wiederum zumindest ein Teilbereich mit einer kristallinen Hartstoffschicht 2 versehen.

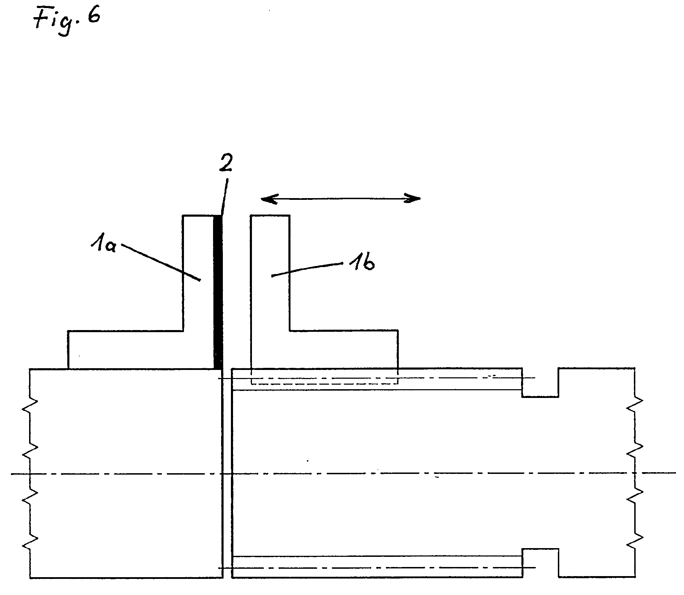

Eine weitere Anwendung der Erfindung ist in Fig. 6 schematisch dargestellt. Diese betrifft eine Schaltkupplung mit Kupplungsflanschen 1a und 1b, die fest auf miteinander zu kuppelnden Wellenenden montiert sind. Der in der Zeichnung rechte Kupplungsflansch 1b ist mit seiner axialen Verbindungsfläche axial gegen die korrespondierende Verbindungsfläche des Kupplungsflansches 1a einrückbar. Diese Verbindungsfläche des Kupplungsflansches 1a ist im dargestellten Beispiel mit einer erfindungsgemäßen Hartstoffschicht 2 versehen. Im Kontakt mit der korrespondierenden Verbindungsfläche stirnseitig an dem Kupplungsflansch 1b sorgt diese für den erfindungsgemäßen Mikroformschluß.

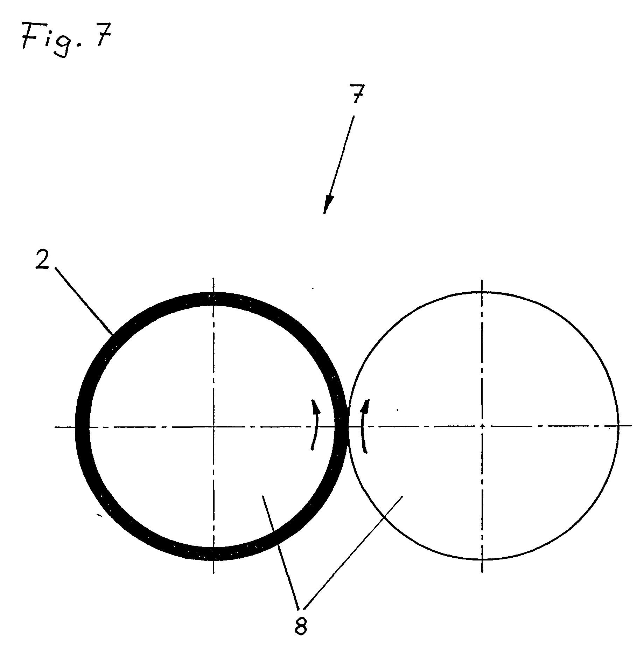

Fig. 7 zeigt schematisch ein Wälzgetriebe 7, welches mit ihrem Außenumfang gegeneinander reibschlüssig abwälzbare Wälzelemente 8 umfaßt, welche beispielsweise ring- oder kegelförmig ausgebildet sein können zur Realisierung eines stufenlos veränderbaren Übersetzungsverhältnisses. Das in der Zeichnung links dargestellte Wälzelement 8 ist auf seinem Außenumfang, d. h. seiner Wälzfläche mit einer erfindungsgemäßen Hartstoffbeschichtung 2 versehen. Im dargestellten Ausführungsbeispiel ist das andere Wälzelement nicht mit einer derartigen Oberflächenschicht versehen, wodurch in der Regel bereits ein hinreichend hoher Wälzreibwert zur Übertragung größerer Drehmomente erreicht wird. Es ist jedoch ebenfalls denkbar, dass beide miteinander in Wälzeingriff stehende Wälzelemente 8 mit Hartstoffbeschichtungen 2 versehen sind.

Über die in Fig. 2 bis Fig. 7 dargestellten Ausführungsformen hinaus ist noch eine Vielzahl weiterer Anwendungen der Erfindung denkbar. Wesentliches Merkmal ist, daß entweder eine oder beide Verbindungsflächen in einer kraftschlüssigen Verbindung ganz oder teilweise mit einer Hartstoffschicht 2 gemäß Fig. 1 versehen sind. Diese zeichnet sich durch unmittelbar auf einem entsprechenden Bauteil aufgewachsene Kristallite 3 aus, welche mit ihren vorstehenden Kristallstrukturen 4 eine definierte Oberflächenrauhigkeit vorgeben. Dadurch, daß diese Hartstoffschicht 2 bevorzugt flächig durchgehend kompakt ausgebildet ist, d. h. zwischen den einzelnen Kristalliten 3 keine Zwischenräume bestehen, wird eine besonders hohe Haftfähigkeit erzielt. Diese wird auch nicht, wie im Stand der Technik, durch zusätzliche Binde- oder Matrixphasen beeinträchtigt, da derartige Maßnahmen bei der Erfindung nicht erforderlich sind.

## Patentansprüche

1. Kraftschlüssig miteinander verbindbare Bauteile, mit flächig gegeneinander fügbaren Verbindungsflächen, zwischen denen im Fügespalt Formschlußmittel einbringbar sind, die eine höhere Festigkeit und Härte haben als der Grundwerkstoff der Bauteile, **dadurch gekennzeichnet, daß** die Formschlußmittel eine auf zumindest einer Verbindungsfläche eines Bauteils (1a/b) aufgebrachte kristalline Hartstoffschicht (2) mit aus der Schichtoberfläche vorstehenden Kristalliten (4) umfassen.

2. Bauteil nach Anspruch 1, **dadurch gekennzeichnet, daß** die Hartstoffschicht (2) flächig durchgehend kompakt ausgebildet ist.

3. Bauteil nach Anspruch 1 oder 2, **dadurch gekennzeichnet, daß** die Hartstoffschicht (2) unmittelbar auf dem Grundmaterial des Bauteils (1a/b) angebunden ist.

4. Bauteil nach einem der Ansprüche 1 bis 3, **dadurch gekennzeichnet, daß** die Hartstoffschicht (2) im CVD-Verfahren aufgebracht ist.

5. Bauteil nach einem der Ansprüche 1 bis 3, **dadurch gekennzeichnet, daß** die Hartstoffschicht (2) im PVD-Verfahren aufgebracht ist.

6. Bauteil nach einem der Ansprüche 1 bis 5, **dadurch gekennzeichnet, daß** die Hartstoffschicht (2) Nitride, z. B. Titannitrid (TiN) enthält.

7. Bauteil nach einem der Ansprüche 1 bis 5, **dadurch gekennzeichnet, daß** die Hartstoffschicht (2) Karbide enthält.

8. Bauteil nach einem der Ansprüche 1 bis 7, **dadurch gekennzeichnet, daß** die Hartstoffschicht (2) auf einem metallischen Bauteil (1a/b) aufgebracht ist.

9. Bauteil nach einem der Ansprüche 1 bis 8, **dadurch gekennzeichnet, daß** die Schichtdicke der Hartstoffschicht (2) etwa bis 10 µm beträgt.

10. Bauteil nach einem der Ansprüche 1 bis 9, **dadurch gekennzeichnet, daß** die Abmessungen der Kristallite (3) kleiner sind als die Schichtdicke der Hartstoffschicht (2).

11. Bauteil nach einem der Ansprüche 1 bis 10, **dadurch gekennzeichnet, daß** die Klemmfläche einer lösbaren Klemm-oder Spannvorrichtung (5) zumindest teilweise mit einer Hartstoffschicht (2) versehen ist.

12. Bauteil nach einem der Ansprüche 1 bis 10, **dadurch gekennzeichnet, daß** es als abwälzendes Element (8) eines Wälzgetriebes (7) ausgebildet ist, wobei die Wälzfläche zumindest teilweise mit einer Hartstoffschicht (2) versehen ist.

13. Bauteil nach einem der Ansprüche 1 bis 10, **dadurch gekennzeichnet, daß** es als Zwischenelement ausgebildet ist, welches zwischen zwei gegeneinander fügbare Verbindungsflächen (1a, 1b) einsetzbar ist und beidseitig mit einer Hartstoffschicht (2) versehen ist.

14. Kraftschlüssige Verbindung von zwei Bauteilen nach einem oder mehreren der Ansprüche 1 bis 13, mit flächig gegeneinander fügbaren Verbindungsflächen, zwischen denen im Fügespalt Formschlußmittel einbringbar sind, die härter sind als der Grundwerkstoff der Bauteile, **dadurch gekennzeichnet, daß** die Formschlußmittel eine auf zumindest einer Verbindungsfläche eines Bauteils aufgebrachte kristalline Hartstoffschicht (2) mit aus der Schichtoberfläche vorstehenden Kristalliten (4) umfassen.

15. Verfahren zur Herstellung von kraftschlüssig miteinander verbindbaren Bauteilen nach einem oder mehreren der Ansprüche 1 bis 13, **dadurch gekennzeichnet, daß** eine kristalline Hartstoffschicht (2) unmittelbar auf der Verbindungsfläche eines Bauteils (1a/b) kristallin abgeschieden wird.
